# EUROPEAN PATENT APPLICATION

(11) **EP 2 980 951 A1**
(43) Date of publication of application: **03.02.2016**
(21) Application number: 13879790.7
(22) Date of filing: 26.03.2013
(51) Int. Cl.: H02J 7/00, H02J 3/32

(54) **METHOD FOR CONTROLLING CHARGE/DISCHARGE SYSTEM, AND CHARGE/DISCHARGE SYSTEM**

(71) Applicant: The Chugoku Electric Power Co., Inc., Hiroshima-shi, Hiroshima 730-8701 (JP)
(72) Inventor: OKUBO, Norihiro, Hiroshima-shi Hiroshima 730-8701 (JP)
(74) Representative: Portch, Daniel
(86) International application number: PCT/JP2013/058804
(87) International publication number: WO 2014/155529

(57) **Abstract**

[Problem] To reliably perform charge/discharge control in a charge/discharge system comprising a charger/discharger and a battery system that includes a secondary battery and a battery-side control device.

[Solution]

The battery system 100 including the secondary battery 110 and the battery-side control device 120, and a discharger 200 configured to discharge the secondary battery 110 to output direct-current power and convert power from the alternating-current power supply 4 into direct current to charge the secondary battery 110, are included; the charger/discharger 200 includes a charge/discharge-side control device 210 configured to control charge and discharge; and when the charge/discharge-side control device 210 establishes communicable connection with the battery-side control device 120, and receives specific information for specifying a charge/discharge control program, which is a program for controlling the charge and discharge transmitted from the battery system 100, the charge/discharge-side control device 210 establishes communicable connection with the external server device 300, acquires charge/discharge control program specified by the specific information, and performs control according to the charge/discharge control program.

## Description

### [Technical Field]

The present invention relates to a method for controlling a charge/discharge system, and the charge/discharge system, the charge/discharge system comprising: a battery system that includes a secondary battery and a battery-side control device; and a charger/discharger that includes a charger-side control device.

### [Background Art]

Recently, electric vehicles (EV) and plug-in hybrid vehicles (PHV) have been in widespread use. With such widespread use, charge systems for charging secondary batteries included in electric vehicles and plug-in hybrid vehicles (hereinafter, both referred to as electric vehicles or EV) have been developed.

Patent Literature 1 describes, as an example of a charge system for electric vehicle, such a charge system that an electric vehicle stores a charge control program indicative of a charge pattern for a secondary battery, and a charger of the electric vehicle communicates with the electric vehicle prior to supplying charging power to the secondary battery, receives the charge control program stored in the electric vehicle, to store it in the charger, and controls charging power according to this charge control program.

Further, in recent years, so called Vehicle to Home (V2H) representing not only charging a secondary battery but also utilizing the energy of the secondary battery as home electric power, has been a focus of attention.

Patent Literature 2 describes, as an example of a V2H system, such a system that a residential secondary battery and a charger/discharger including a charge/discharge connector are provided on the residential side; and a vehicular power system including an inlet part, power converters that perform AC/DC conversion and DC/AC conversion, and a vehicular secondary battery are provided on the electric vehicle side. In this V2H system, the vehicular power system is connected, via the inlet part, with the connector for the charger/discharger, to be supplied with the power from the residential side. Further, in a time of emergency such as power failure, the residential secondary battery and/or the vehicular secondary battery supplies power to home electric equipment.

Patent Literature 3 describes, as another example of the V2H system, such a system that a charger/discharger that is connected to system power on the residential side is connected to a secondary battery of an electric vehicle through a charging paddle. In this V2H system, commercial power supplied from a power system is converted into high-frequency AC, and the high-frequency AC is supplied to the electric vehicle side by electromagnetic induction. In the electric vehicle, high-frequency AC is converted into DC, and the resultant is charged to the secondary battery. Then, when supplying the power from the secondary battery to the residential side, a power supply amount is limited to a range obtained by subtracting an amount of power that should be saved from the remaining capacity of the secondary battery, in this V2H system.

### [Citation List]

### [Patent Literature]

[Patent Literature 1] Japanese Patent Application Laid-open Publication No. 2012-157131
[Patent Literature 2] Japanese Patent Application Laid-open Publication No. Heisei 11-178234
[Patent Literature 3] Japanese Patent Application Laid-open Publication No. 2001-258177

### [Summary of Invention]

### [Technical Problem]

Incidentally, in the existing V2H system that charges an electric vehicle with direct current, the control over an electric vehicle and a home inverter (hereinafter, referred to as an inverter) is performed according to predetermined protocols, however, these protocols are required to be matched between a hardware level and a software level (for example, the above Patent Literatures 2 and 3).

In such a circumstance, since change in the control protocols of the electric vehicle and the inverter is limited, change in the V2H system configured with the electric vehicle and the inverter is usually not easy, and thus is limited to change in parameter or the like, for example. Even though new electric vehicles and/or inverters with different protocols are developed by virtue of technical progress, etc., it is difficult to introduce them to the existing V2H systems. Further, even if it is possible to comply with the new protocols by updating control software, such updating is required for both the electric vehicle and the inverter. Thus, their management becomes complicated, which may cause inconsistency between their operations resulting in inappropriate control.

The present invention has been made in view of such circumstances, and an object thereof is to reliably perform charge/discharge control in a charge/discharge system including: a battery system including a secondary battery and a battery-side control device; and a charger/discharger including a charger-side control device.

### [Solution to Problem]

In order to solve the above problem, a primary aspect of the present invention is a method for controlling a charge/discharge system comprising a battery system and a charger/discharger, the battery system including a secondary battery and a battery-side control device, the charger/discharger being configured to discharge the secondary battery to output direct-current power, and configured to convert power supplied from an alternating-current power supply into direct current, to charge the secondary battery, the charger/discharger including a charge/discharge-side control device configured to control the charge and the discharge, the method comprising:
the charge/discharge-side control device establishing communicable connection with the battery-side control device;
the charge/discharge-side control device establishing communicable connection with an external server device, when receiving specific information, transmitted from the battery-side control device, for specifying a charge/discharge control program, the charge/discharge control program being a program for controlling the charge and the discharge;
the charge/discharge-side control device acquiring, from the server device, the charge/discharge control program specified by the specific information; and
the charge/discharge-side control device controlling the charge and the discharge according to the acquired charge/discharge control program.

According to the present invention, when receiving the specific information for specifying the type of the charge/discharge control program from the battery-side control device, the charge/discharge-side control device acquires, from the server device, charge/discharge control program of the type specified by the received specific information, and performs charge/discharge control according to the acquired charge/discharge control program, and thus charge/discharge control is performed between the charger/discharger side and the battery system side, based on the charge/discharge control program of the type compatible with both sides. Thus, according to a method for controlling the charge/discharge system of the present invention, charge/discharge control can be reliably performed between the battery system and the charger/discharger.

Another aspect of the present invention is the method for controlling the charge/discharge system, wherein
when controlling the charge or the discharge according to the acquired charge/discharge control program, the charge/discharge-side control device determines whether a predetermined current value defined by the charge/discharge control program exceeds a maximum current value at which the secondary battery can be charged or discharged, or whether a temperature of the secondary battery exceeds a maximum allowable value under control of the charge or the discharge defined by the charge/discharge control program, and
when determining that the current value does not exceed the maximum current value or the temperature of the secondary battery does not exceed the maximum allowable value, the charge/discharge-side control device starts control of the charge or the discharge.

According to the present invention, the control of charge or discharge for the secondary battery can be performed based on an appropriate supply current value, and also the control of charge or discharge for the secondary battery can be performed while the temperature of the secondary battery is being maintained at an appropriate temperature. As such, the charge and discharge of the secondary battery can be efficiently performed.

Another aspect of the present invention is a method for controlling a charge/discharge system comprising a battery system and a charger/discharger, the battery system including a secondary battery, the charger/discharger being configured to discharge the secondary battery to output direct-current power, and configured to convert power supplied from an alternating-current power supply into direct current, to charge the secondary battery, the charger/discharger including a charge/discharge-side control device, the battery system including a battery-side control device configured to control the charge and the discharge, the method comprising:
the battery-side control device establishing communicable connection with the charge/discharge-side control device;
the battery-side control device establishing communicable connection with an external server device, when receiving specific information, transmitted from the charge/discharge-side control device, for specifying a charge/discharge control program, the charge/discharge control program being a program for controlling the charge and the discharge;
the battery-side control device acquiring, from the server device, the charge/discharge control program specified by the specific information; and
the battery-side control device controlling the charge and the discharge according to the acquired charge/discharge control program.

According to the present invention, when receiving the information for specifying the type of the charge/discharge control program from charge/discharge-side control device, the battery-side control device acquires from the server device the charge/discharge control program of the type specified by the received specific information, and performs charge/discharge control according to the acquired charge/discharge control program, and thus charge/discharge control is performed between the charger/discharger side and the battery system side, based on the charge/discharge control program of the type compatible with both the sides. Therefore, according to the method for controlling the charge/discharge system of the present invention, charge/discharge control can be reliably performed over the battery system and the charger/discharger.

Another aspect of the present invention is the method for controlling the charge/discharge system, wherein
when controlling the charge or the discharge according to the acquired charge/discharge control program, the battery-side control device determines whether a predetermined current value defined by the charge/discharge control program exceeds a maximum current value at which the secondary battery can be charged or discharged, or whether a temperature of the secondary battery exceeds a maximum allowable value under control of the charge or the discharge defined by the charge/discharge control program, and
when determining the current value does not exceed the maximum current value or the temperature of the secondary battery does not exceed the maximum allowable value, the battery-side control device controls the charge or the discharge.

According to the present invention, control of the charge or discharge for the secondary battery based on the appropriate supply current value, and also control of the charge or discharge for the secondary battery can be controlled while the temperature of the secondary battery being maintained at the appropriate temperature. As such, the charge and discharge for the secondary battery can be efficiently performed.

Another aspect of the present invention is a charge/discharge system comprising:
a battery system including a secondary battery and a battery-side control device; and
a charger/discharger configured to discharge the secondary battery to output direct-current power, and configured to convert power supplied from an alternating-current power supply into direct current, to supply the secondary battery,
the charger/discharger including a charge/discharge-side control device configured to control the charge and the discharge,
the charge/discharge-side control device being configured to establish communicable connection with the battery-side control device,
the charge/discharge-side control device being configured to establish communicable connection with an external server device, when receiving specific information, transmitted from the battery-side control device, for specifying a charge/discharge control program, the charge/discharge control program being a program for controlling the charge and the discharge,
the charge/discharge-side control device being configured to acquire, from the server device, the charge/discharge control program specified by the specific information, and
the charge/discharge-side control device being configured to control the charge and the discharge according to the acquired charge/discharge control program.

Another aspect of the present invention is a charge/discharge system comprising:
a battery system including a secondary battery; and
a charger/discharger configured to discharge the secondary battery to output direct-current power, and configured to convert power supplied from an alternating-current power supply into direct current, to charge the secondary battery,
the charger/discharger including a charge/discharge-side control device, the battery system including a battery-side control device configured to control the charge and the discharge,
the battery-side control device being configured to establish communicable connection with the charge/discharge-side control device,
the battery-side control device being configured to establish communicable connection with an external server device, when receiving specific information, transmitted from the charge/discharge-side control device, for specifying a charge/discharge control program, the charge/discharge control program being a program for controlling the charge and the discharge,
the battery-side control device being configured to acquire, from the server device, the charge/discharge control program specified by the specific information, and
the battery-side control device being configured to control the charge and the discharge according to the acquired charge/discharge control program.

Furthermore, a problem disclosed in the present application and a method for solving it will become clear from the description of embodiments and the drawings.

### [Advantageous Effects of Invention]

According to the present invention, it is possible to reliably perform charge/discharge in a charge/discharge system that includes: a battery system including a secondary battery and a battery-side control device; a charger/discharger including a charger-side control device.

### [Brief Description of the Drawings]

[Fig. 1]

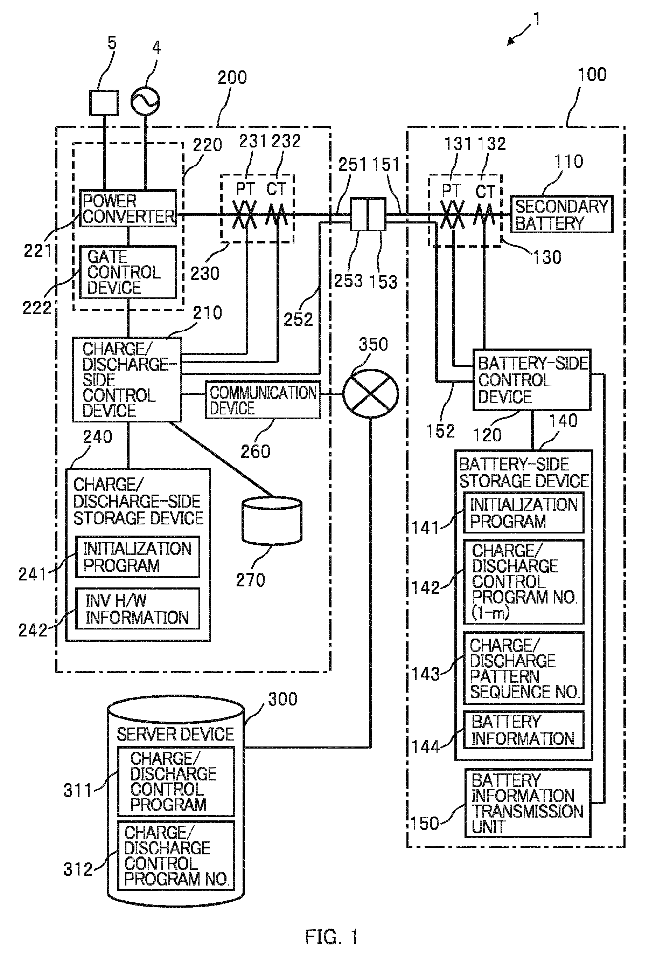

   Fig. 1 is a block diagram illustrating a configuration of a charge/discharge system 1.
[Fig. 2]

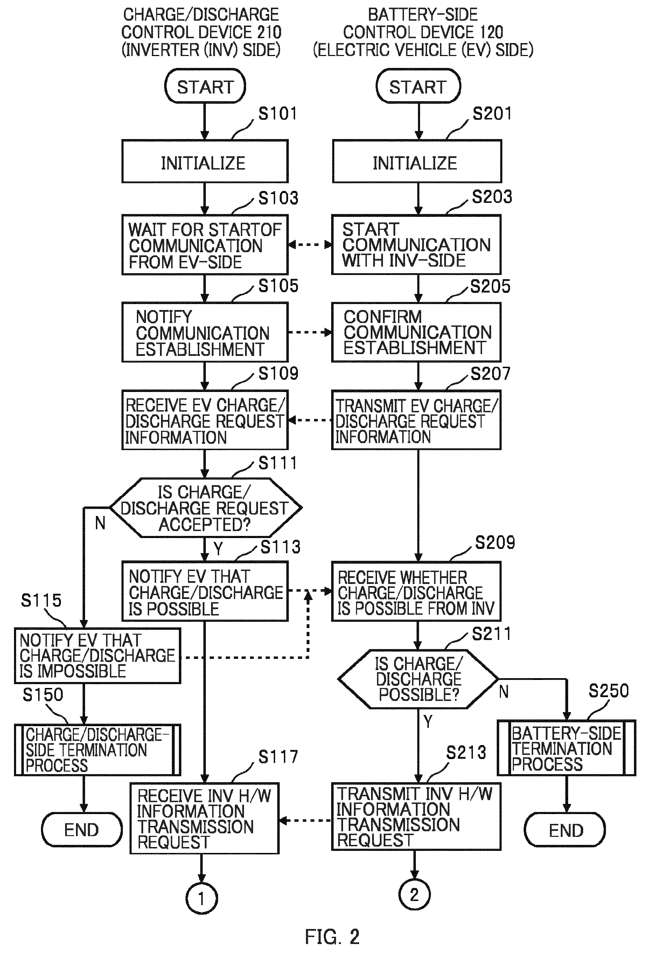

   Fig. 2 is a flowchart illustrating processes executed in the charge/discharge system 1.
[Fig. 3]

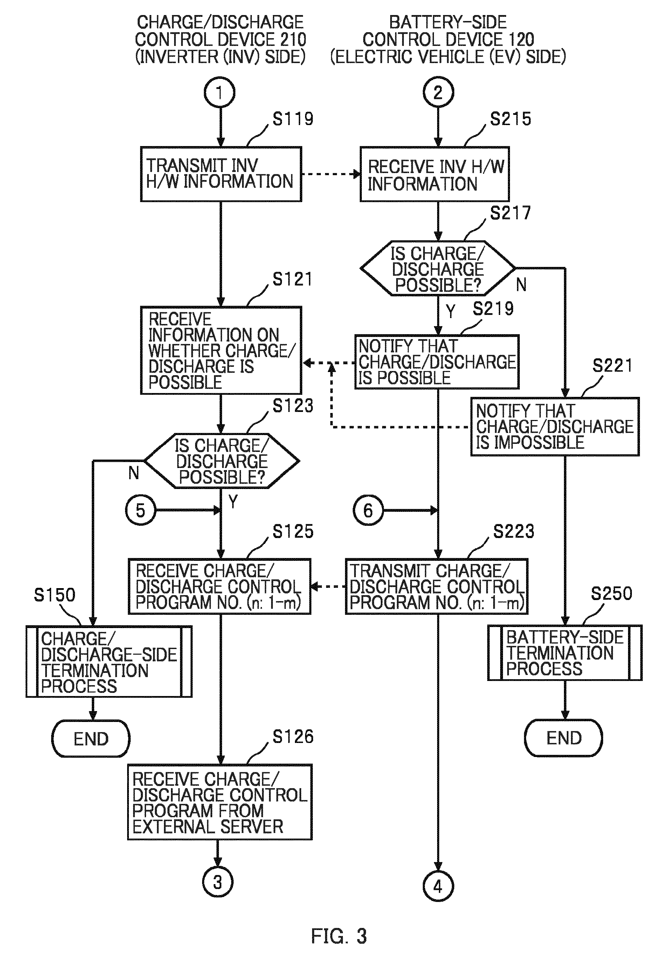

   Fig. 3 is a flowchart illustrating processes executed in the charge/discharge system 1.
[Fig. 4]

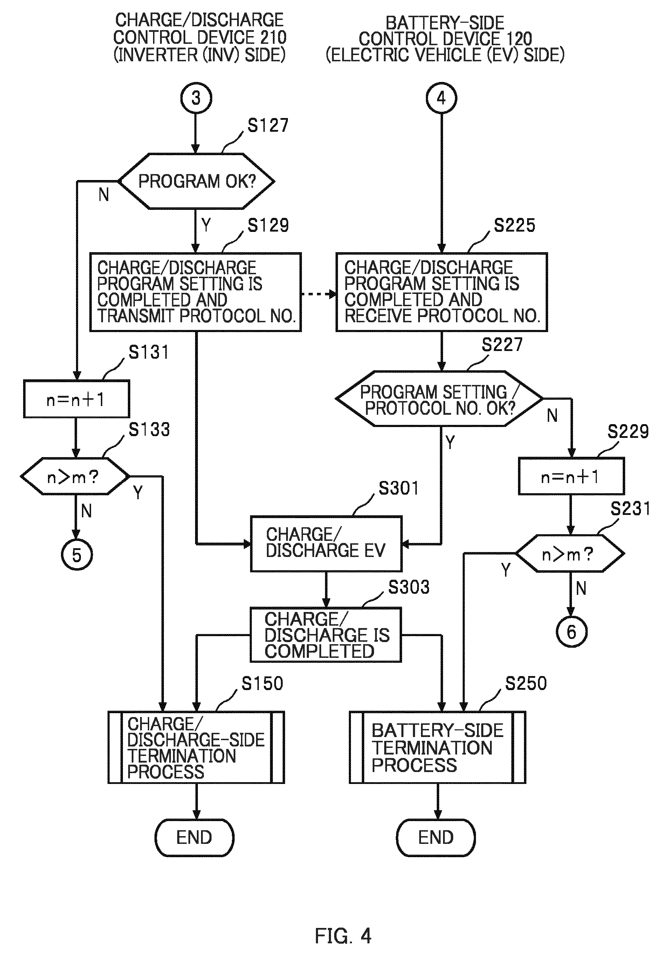

   Fig. 4 is a flowchart illustrating processes executed in the charge/discharge system 1.
[Fig. 5]

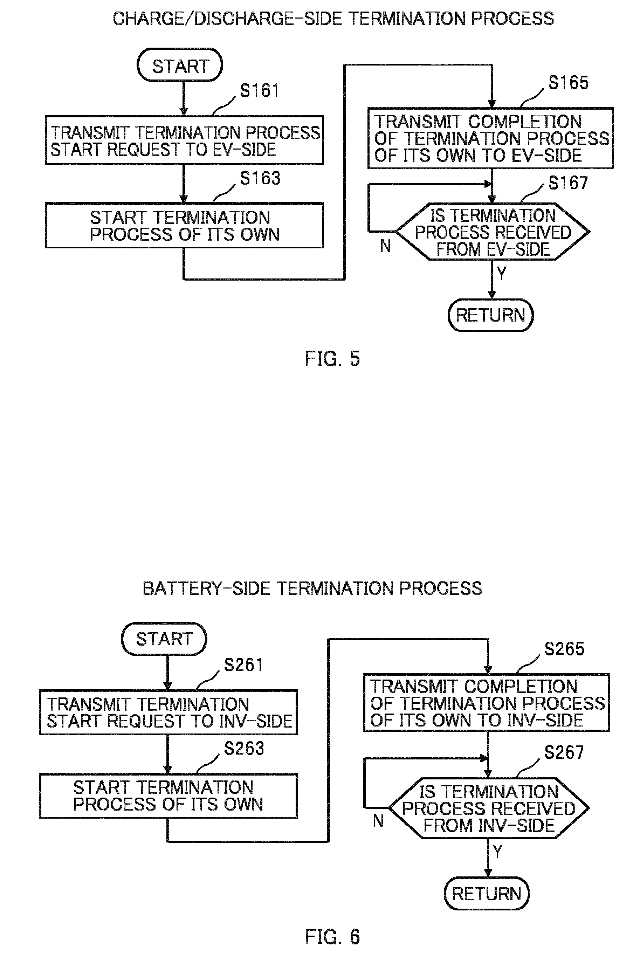

   Fig. 5 is a flowchart illustrating a charge/discharge-side termination process.
[Fig. 6]
   Fig. 6 is a flowchart illustrating a battery-side termination process.
[Fig. 7]

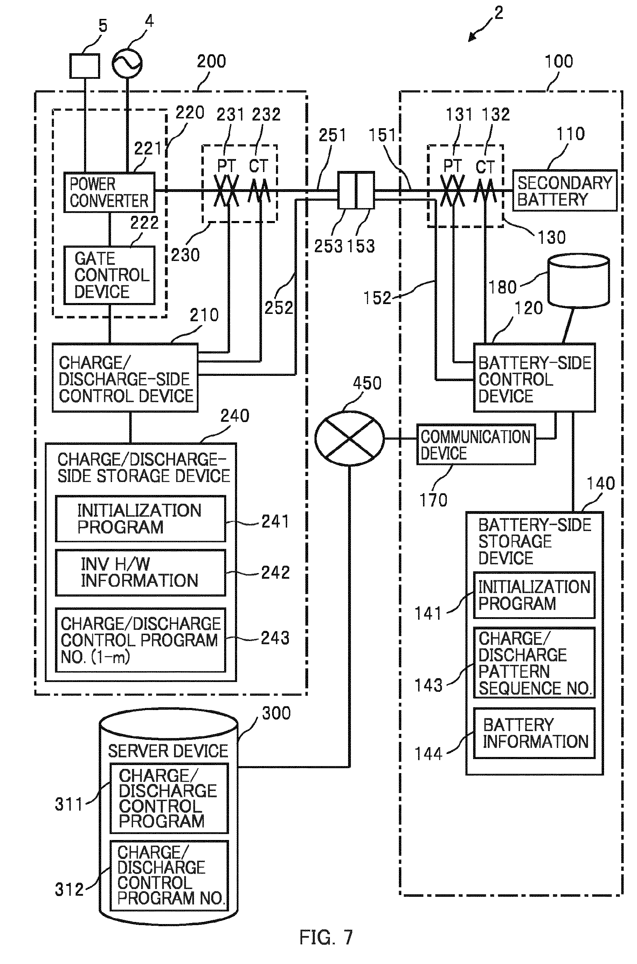

   Fig. 7 is a block diagram illustrating a configuration of a charge/discharge system 2.
[Fig. 8]

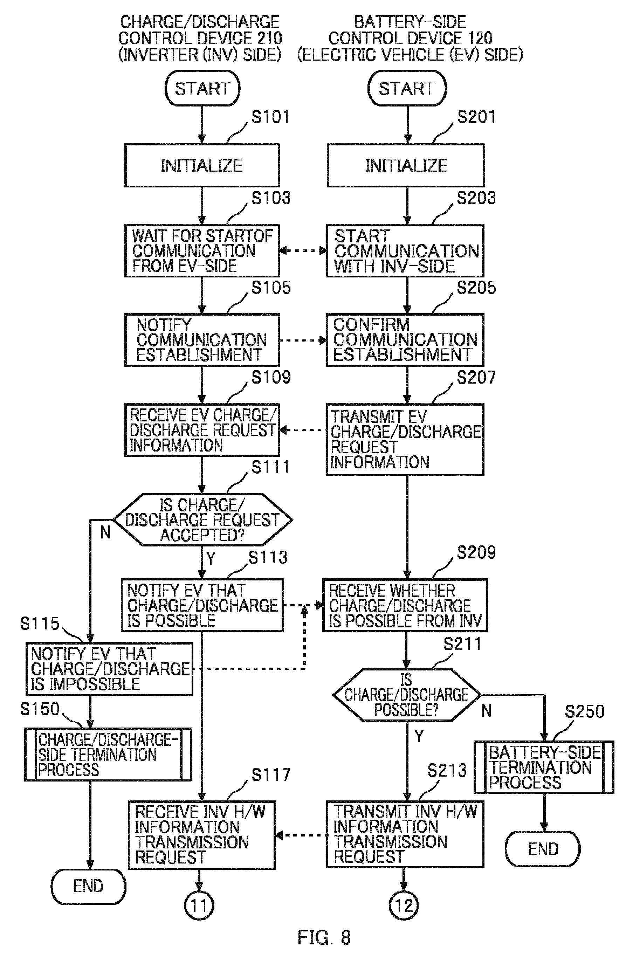

   Fig. 8 is a flowchart illustrating processes executed in the charge/discharge system 2.
[Fig. 9]

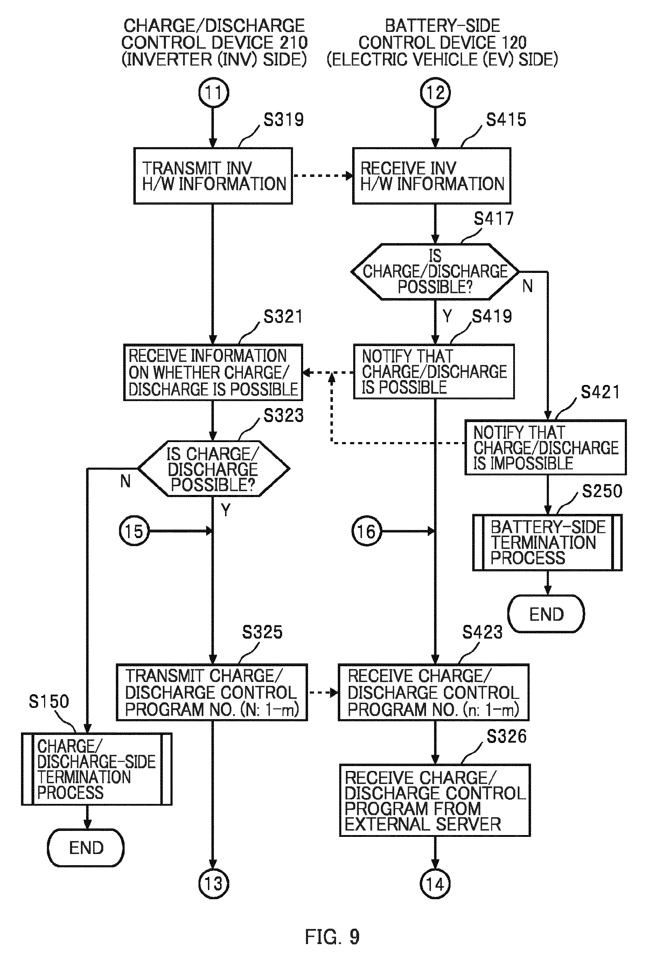

   Fig. 9 is a flowchart illustrating processes executed in the charge/discharge system 2.
[Fig. 10]

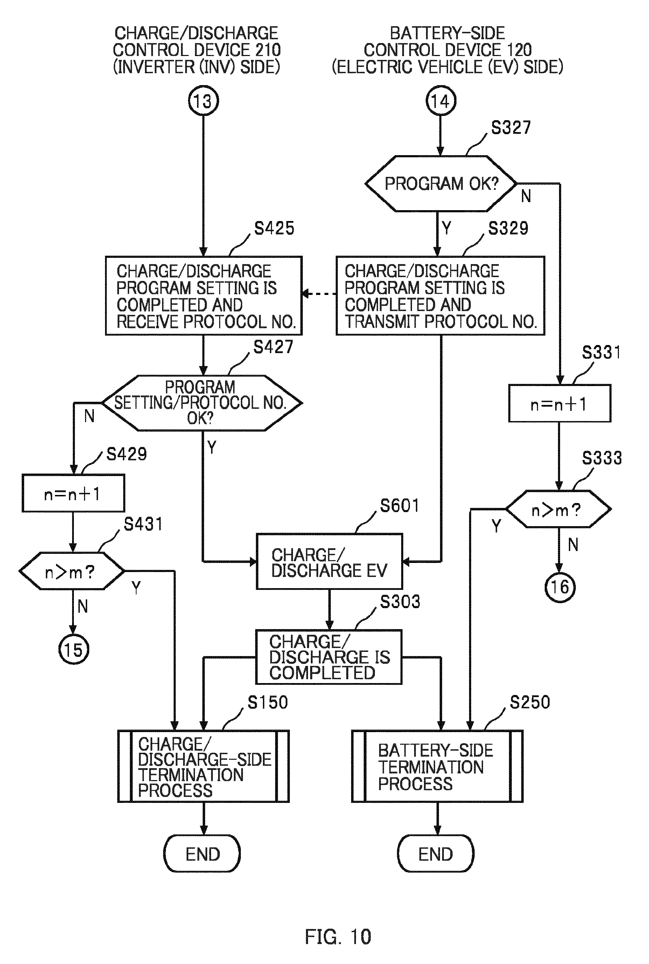

   Fig. 10 is a flowchart illustrating processes executed in the charge/discharge system 2.

### [Description of Embodiments]

### <First Embodiment>

Fig. 1 is a block diagram illustrating a configuration of a charge/discharge system 1 according to a first embodiment. As illustrated in the figure, the charge/discharge system 1 according to the present embodiment includes: a battery system 100; a charger/discharger 200 including a power converter 221; and a server device 300.

The battery system 100 is a system including a secondary battery 110 and a battery-side control device 120, and is a vehicle such as an electric vehicle, a plug-in hybrid vehicle, or the like.

The charger/discharger 200 is, for example, a bi-directional inverter provided in a consumer. The charger/discharger 200 is configured to discharge the secondary battery 110, and also convert power supplied from an alternating-current power supply 4 into direct current using the power converter 221, to charge the secondary battery 110. Note that power discharged from the secondary battery 110 is supplied via the power converter 221 to a load 5 (for example, a load in the consumer).

As illustrated in Fig. 1, the charger/discharger 200 includes: a charge/discharge-side control device 210; a power-supply unit 220; a charge/discharge-side power detection unit 230; a charge/discharge-side storage device 240; a communication device 260; and a storage device 270.

The charge/discharge-side control device 210 is in charge of control in the charger/discharger 200. The charge/discharge-side control device 210 includes a CPU, a memory, a communication interface and the like (all not shown), and is configured to be operated such that a program stored in the storage device 270 (hereinafter referred to as a charge/discharge control program) is read into a memory and the read program is executed.

Note that the charge/discharge control program is a program that is operated according to a charge/discharge control procedure (charger/discharger-side protocol), executed by the charge/discharge-side control device 210, and a charge/discharge control procedure (battery-side protocol) in the battery-side control device 120. These protocols are dependent on hardware configuring the charger/discharger 200 and the battery system 100 and software built therein, and also both the protocols should be compatible with (matched to) each other. Thus, if the hardware and the software for the charger/discharger 200 or the battery system 100 are different, charge/discharge control programs operated thereon are required to be different.

In the power-supply unit 220, charging power for charging the secondary battery 110 is outputted therefrom and discharging power from the secondary battery 110 is inputted thereto, and the power-supply unit 220 includes the power converter 221 and a gate control device 222. The power converter 221 is configured to convert alternate-current power from the alternating-current power supply 4 into direct-current power, and also convert direct-current power sent from the secondary battery 110 into alternate current power. The power converter 221 includes a PWM converter (not shown). This PWM converter is configured to control power according to a gate control signal that is inputted to a gate terminal. The gate control device 222 is configured to generate the gate control signal that is inputted to the gate terminal of the power converter 221. The gate control device 222 is electrically connected to the charge/discharge-side control device 210, and the operation thereof is controlled by the charge/discharge-side control device 210.

The charge/discharge-side power detection unit 230 includes a voltage conversion unit 231 and a current conversion unit 232, and is provided midway in a power-supply line 251, through which charging power is supplied to the secondary battery 110 and the power of the secondary battery 110 is discharged. The voltage conversion unit 231 is configured to convert a terminal voltage of the power-supply unit 220 (power converter 221), included in the charger/discharger 200, into a voltage having a magnitude suitable for measurement, and is configured with, for example, a current limiting resistor. The current conversion unit 232 is a unit configured to convert a current flowing through the power-supply line 251 into a current or a voltage having a magnitude suitable for measurement, and is configured with, for example, a shunt or a direct current transformer. The output from the voltage conversion unit 231 and the current conversion unit 232 is inputted to the charge/discharge-side control device 210. Then, the charge/discharge-side control device 210 can recognize the magnitude of the power from the output of the conversion units 231 and 232.

The charge/discharge-side storage device 240 is configured to store various information required to charge/discharge. The charge/discharge-side storage device 240 is configured with a semiconductor storage device, a magnetic storage device, or an optical storage device, and its stored information is read by the charge/discharge-side control device 210. The charge/discharge-side storage device 240 includes: an initialization program storage area 241 for storing an initialization program; and a hardware information storage area 242. In these areas, the hardware information storage area 242 is configured to store the maximum output of the power converter 221 (represented by a voltage value, a current value, a power value, etc.) and the range of voltages that can be inputted to the power converter 221, and the like (hereinafter, such information is referred to as hardware information).

The communication device 260 is a device to connect the charge/discharge-side control device 210 and the server device 300, via wired or wireless communication network 350 (for example, communication network using wired LAN, wireless LAN, the Internet, exclusive line, Power Line Communication (PLC), or the like). The charge/discharge-side control device 210 is configured to control the communication device 260, so as to establish communicable connection with the server device 300.

The storage device 270 includes: for example, a hard disk; a Solid State Drive (SSD) ; and the like, and is configured to store a charge/discharge control program acquired from the server device 300.

The server device 300 includes: a CPU; a memory; a communication interface; and/or a storage device such as an SSD or a hard disk (all not shown), and is configured to operate according to a program stored in a memory.

The server device 300 includes: a charge/discharge control program storage area 311; and a charge/discharge control program number information storage area 312. In these areas, the charge/discharge control program storage area 311 is configured to store at least one or more charge/discharge control programs. The charge/discharge control program number information storage area 312 is configured to store number information (corresponding to specific information, hereinafter referred to as charge/discharge control program number information) for specifying each type of the charge/discharge control programs stored in the charge/discharge control program storage area 311. Note that, in the following description, the numbers managed by charge/discharge program number information, in other words, the numbers stored in the charge/discharge program number information are referred to as charge/discharge control program numbers.

Further, as illustrated in Fig. 1, the battery system 100 includes: the secondary battery 110; the battery-side control device 120; a battery-side power detection unit 130; a battery-side storage device 140; and a battery information transmission unit 150.

The secondary battery 110 is configured to store direct-current power, which is a power source for the battery system 100, and be charged with the charging power supplied from the charger/discharger 200. A lithium-ion battery is preferably used as the secondary battery 110.

The battery-side control device 120 is in charge of control in the battery system 100. This battery-side control device 120 includes: a CPU; a memory; a communication interface; and/or the like (all not shown), and is configured to operate according to a program stored in a memory.

The battery-side power detection unit 130 includes: a voltage conversion unit 131; and a current conversion unit 132, and is provided to a power-supply line 151, through which charging power is supplied to the secondary battery 110 and the power of the secondary battery 110 is discharged. The voltage conversion unit 131 is configured to convert a voltage supplied through the power-supply line 151 into a voltage having a magnitude suitable for measurement. The voltage conversion unit 131 is configured with, for example, a current limiting resistor. The current conversion unit 132 is configured to convert a current flowing through the power-supply line 151 into a current or a voltage having a magnitude suitable for measurement. The current conversion unit 132 is configured with, for example, a shunt or a direct current transformer.

The output from the voltage conversion unit 131 and the current conversion unit 132 is inputted to the battery-side control device 120. Since the output of the voltage conversion unit 131 and the current conversion unit 132 is indicative of a voltage and a current, the battery-side control device 120 can recognize the magnitude of the power, based on the output of the voltage conversion unit 131 and the current conversion unit 132.

Note that a battery-side connector 153 is provided at the ends of the power-supply line 151 and a communication line 152 from the battery-side control device 120. The battery-side connector 153 is a part connected to a charge/discharge-side connector 253 included in the charger/discharger 200. The charge/discharge-side connector 253 is provided at the ends of the power-supply line 251 and the end of a communication line 252 on the charger/discharger 200 side. Thus, when the battery-side connector 153 is connected to the charge/discharge-side connector 253, the power-supply line 151 and the communication line 152 are electrically connected to the power-supply line 251 and the communication line 252, respectively.

The battery-side storage device 140 is configured to store various information required to charge/discharge the secondary battery 110. In the battery-side storage device 140, a semiconductor storage device such as a memory; a magnetic storage device such as a hard disk and a SSD; or an optical storage device such as a CD-ROM, is used, and its stored information is read by the battery-side control device 120.

The battery-side storage device 140 includes: an initialization program storage area 141 for storing an initialization program; a charge/discharge control program number storage area 142; a charge/discharge pattern sequence number storage area 143 for storing charge/discharge patterns; and a battery information storage area 144.

In these areas, the charge/discharge control program number storage area 142 is configured to store information corresponding to the charge/discharge control program number information stored in the server device 300 (hereinafter, referred to as battery-side charge/discharge control program number information). In the present embodiment, the integer values from "1" to "m" (m represents an integer value equal to or greater than 1) is stored as the battery-side charge/discharge control program number information.

The charge/discharge pattern sequence number storage area 143 is configured to store charge/discharge patterns executed by the charge/discharge control programs that are specified by the charge/discharge control program numbers. The charge/discharge patterns includes: for example, a charge/discharge pattern that is set so as to reduce charging/discharging time by increasing charging/discharging current; a charge/discharge pattern that is set so as to reduce charging/discharging current instead of increasing charging/discharging time; and a charge/discharge pattern that is set in the middle of the above two patterns.

The battery information storage area 144 is configured to store battery intrinsic parameters, such as a charge start/end voltage, a discharge start/end voltage, charge temperature characteristics, discharge temperature characteristics, the maximum dischargeable current, and the maximum chargeable current, of the secondary battery 110 (hereinafter, referred to as battery intrinsic information). Further, the battery information storage area 144 stores information, such as a voltage or a current of the secondary battery 110, temperatures/voltages of the cells of the secondary battery 110, and the like, at the time of charging/discharging (hereinafter, referred to as battery information at the time of charging/discharging).

The battery information transmission unit 150 is configured to transmit, to the charge/discharge-side control device 210, the battery intrinsic information and the battery information at the time of charging/discharging under the control of the battery-side control device 120.

### <System Operation>

Next, processes executed in the charge/discharge system 1 will be described.

The processes executed in the charge/discharge system 1 are outlined as follows. First, when the battery-side connector 153 of the battery system 100 and the charge/discharge-side connector 253 of the charger/discharger 200 are coupled to each other, various initializations are performed. After the initializations, the charge/discharge-side control device 210 receives the battery-side charge/discharge control program number information (specific information) transmitted from the battery-side control device 120.

When the charge/discharge-side control device 210 receives the battery-side charge/discharge control program number information, the charge/discharge-side control device 210 is connected to the server device 300, and acquires the charge/discharge control program corresponding to the battery-side charge/discharge control program number, received from the battery-side control device 120, of the charge/discharge control programs stored in the server device 300. Then, the charge/discharge-side control device 210 performs charge/discharge control in association with the battery-side control device 120, based on this charge/discharge control program.

Hereinafter, the above-described processes will be described in details. Figs. 2 to 4 are flowcharts illustrating the processes executed in the charge/discharge system 1.

First, with reference to Fig. 2, the battery-side connector 153 and the charge/discharge-side connector 253 are connected to each other and when a switch (not shown) of the charge/discharge-side control device 210, which instructs to start charging or discharging, is operated, the initialization programs are read from the charge/discharge-side storage device 240 and the battery-side storage device 140. Then, the charge/discharge-side control device 210 and the battery-side control device 120 perform initializing operations, respectively (S101, S201). In the initializing operations, initialization of various setting values, preparation of communication between the charge/discharge-side control device 210 and the battery-side control device 120 and the like are performed.

When the initializing operations have been completed, the charge/discharge-side control device 210 and the battery-side control device 120 enter the states of waiting for start to communicate, respectively (S103, S203). Here, negotiations are performed between the charge/discharge-side control device 210 and the battery-side control device 120, to establish a communication state. Then, when the communication state has been established, the charge/discharge-side control device 210 transmits, to the battery-side control device 120, notification information indicative that the communication state has been established (S105). This notification information is received by the battery-side control device 120 (S205).

The battery-side control device 120 that has received the notification information transmits to the charge/discharge-side control device 210 EV charge/discharge request information indicative of charge/discharge request to a charger 200 (S207). This EV charge/discharge request information includes battery intrinsic information.

When the charge/discharge-side control device 210 receives EV charge request information (S109), the charge/discharge-side control device 210 determines whether to accept the charge/discharge request, based on the battery intrinsic information (S111). That is, whether the charger/discharger 200 is in a chargeable/dischargeable state is determined.

In a case where the charger/discharger 200 is in the chargeable/dischargeable state (S111: Y), the charge/discharge-side control device 210 transmits, to the battery-side control device 120, chargeable/dischargeable information indicative that charge/discharge is possible (S113). On the other hand, in a case where the charger/discharger 200 is in a state where charge/discharge is impossible (S111: N), the charge/discharge-side control device 210 transmits, to the battery-side control device 120, non-chargeable/non-dischargeable information indicative that charge/discharge is impossible (S115), and performs a charge/discharge-side termination process (S150), to complete the sequence of operations.

When the battery-side control device 120 receives non-chargeable/non-dischargeable information from the charge/discharge-side control device 210 (S209, S211: N), the battery-side control device 120 performs a battery-side termination process (S250), to complete the sequence of operations. On the other hand, when the battery-side control device 120 receives chargeable/dischargeable information from the charge/discharge-side control device 210 (S209, S211: Y), the battery-side control device 120 transmits, to the charge/discharge-side control device 210, hardware request information for requesting transmission of hardware information (S213).

When the charge/discharge-side control device 210 receives the hardware request information (S117), the charge/discharge-side control device 210 transmits the hardware information to the battery-side control device 120, as illustrated in Fig. 3 (S119).

When the battery-side control device 120 receives the hardware information (S215), the battery-side control device 120 determines whether the control device itself is compatible with the specification of the hardware indicated by the hardware information (S217). When the control device is not compatible with the specification (S217: N), the battery-side control device 120 transmits notification information indicative that charge/discharge is impossible to the charge/discharge-side control device 210 (S221), and performs a battery-side termination process (S250), to complete the sequence of the operations.

On the other hand, when the battery-side control device 120 is compatible with the specification indicated by the hardware information (S217: Y), the battery-side control device 120 transmits notification information indicative that charge/discharge is possible to the charge/discharge-side control device 210 (S219), to set a counter n at "1". Then, the battery-side control device 120 transmits, to the charge/discharge-side control device 210, a battery-side charge/discharge control program number (e.g., "1") corresponding to the current counter n (S223).

When receiving notification information indicative that charge/discharge is impossible from the battery-side control device 120 (S121, S123: N), the charge/discharge-side control device 210 performs the charge/discharge-side termination process (S150), to complete the sequence of the operations. On the other hand, when receiving notification information indicative that charge/discharge is possible (S121, S123: Y), the charge/discharge-side control device 210 waits for the reception of the battery-side charge/discharge control program number information from the battery-side control device 120.

When receiving the charge/discharge control program number information from the battery-side control device 120 (S125), the charge/discharge-side control device 210 is connected to the server device 300, to acquire (download) charge/discharge control program (S126). Specifically, the charge/discharge-side control device 210 is connected to the server device 300, to refer to the charge/discharge control program storage area 311 and the charge/discharge program number information storage area 312, and download the charge/discharge control program corresponding to the above received battery-side charge/discharge control program number (e.g., "1"), of the charge/discharge control programs stored in the server device 300. Then, the charge/discharge-side control device 210 stores the downloaded charge/discharge control program into the storage device 270.

Subsequently, as illustrated in Fig. 4, the charge/discharge-side control device 210 determines whether to be able to perform charge/discharge control under the received charge control program (S127). This determination is to determine, for example, that the charge/discharge-side control device 210 cannot perform charge control or discharge control, if the maximum current value defined by the received charge/discharge control program exceeds the maximum current value at which the secondary battery 110 can be supplied or the maximum current value at which the secondary battery 110 can be discharged. Further, it is also determined that the charge/discharge-side control device 210 cannot perform charge control or discharge control, if the temperature of the secondary battery 110 exceeds the upper allowable limit when the charge control or discharge control is performed under the received charge control program.

Here, in a case where the charge/discharge control cannot be performed under the received charge/discharge control program (S127: N), the charge/discharge-side control device 210 increments the counter n by 1 (S131). Then, the charge/discharge-side control device 210 compares the current value of the counter n with m (S133), and when the value of the counter n is greater than m (S133: Y), the charge/discharge-side termination process is performed (S150), to complete the sequence of the processes. On the other hand, when the value of the counter n is equal to or smaller than m (S133: N), the processes from S125 is repeated.

On the other hand , when the charge/discharge-side control device 210 can perform charge/discharge control under the received charge/discharge control program (S127: Y), the charge/discharge-side control device 210 transmits, to the battery-side control device 120, the charge/discharge control program acquired from the server device 300 and the charge/discharge control program number information corresponding to this charge/discharge control program, and also reads this charge/discharge control program into a memory (S129).

The battery-side control device 120 receives the charge/discharge control program and the charge/discharge control program number information transmitted from the charge/discharge-side control device 210. The received charge/discharge control program is read into the memory (S225).

Subsequently, the battery-side control device 120 determines whether the charge/discharge control can be performed under the charge/discharge control program acquired at S219 (S227).

When the charge/discharge control cannot be performed (S227: N), the battery-side control device 120 increments the counter n by 1 (S229). Then, the battery-side control device 120 compares the current value of the counter n with m (S231), and when the value of the counter n is greater than m (S231: Y), the battery-side termination process is performed (S250), to complete the sequence of the processes. Whereas, when the value of the counter n is equal to or smaller than m (S231: N), the process at S223 is repeated.

When the battery-side control device 120 can perform the charge/discharge control (S227: Y), the battery-side control device 120 and the charge/discharge-side control device 210 charges the secondary battery 110 (or discharges the secondary battery 110) in cooperation with each other according to the charge/discharge control program read into the memory (S301).

This charge/discharge is performed, for example, as follows. That is, the charge/discharge-side control device 210 receives charge/discharge battery information from the battery-side control device 120 as necessary, and controls the gate control device 222 and the power converter 221 so that the charging current specified by charge/discharge control program is supplied or the discharging current specified thereby is supplied (discharged), and converts alternate current power from the alternating-current power supply 4 into direct-current power, to supply the resultant to the secondary battery 110 (or converts direct-current power from the secondary battery 110 into alternate current power, to supply the resultant to the load 5 side). Such charge/discharge between the charge/discharge-side control device 210 and the battery-side control device 120 is performed according to charge/discharge pattern specified by the charge/discharge control program.

When the above charge/discharge operation has been completed (S303), the charge/discharge-side control device 210 performs the charge/discharge-side termination process (S150), to complete the sequence of the processes. On the other hand, the battery-side control device 120 performs the battery-side termination process (S250), to complete the sequence of the processes.

Next, the above described charge/discharge-side termination process will be described. Fig. 5 is a flowchart illustrating the charge/discharge-side termination process. As illustrated in the figure, the charge/discharge-side control device 210 transmits a signal for requesting the battery-side control device 120 to complete the sequence of processes (S161), and also starts a process of ending the process performed by the charge/discharge-side control device itself (S163).

When the charge/discharge-side control device 210 transmits to the other side a signal for notifying the other side of the completion of its own termination process (S165), the charge/discharge-side control device 210 waits for the receipt of a signal for notifying the completion of the termination process of the other side, which is transmitted from the other side (S167: N), and when the charge/discharge-side control device 210 receives the signal (S167: Y), the charge/discharge-side termination process is completed.

Next, the battery-side termination process will be described. Fig. 6 is a flowchart illustrating the battery-side termination process. As illustrated in the figure, the battery-side control device 120 transmits a signal for requesting the charge/discharge-side control device 210 to complete the sequence of processes (S261), and also complete the process performed by the battery-side control device itself (S263).

When the battery-side control device 120 transmits to the other side a signal for notifying the completion of its own termination process (S265), the battery-side control device 120 waits for the reception of a signal for notifying completion of the termination process of the other side, which is transmitted from the other side (S267: N), and when the battery-side control device 120 receives the signal (S267: Y), the battery-side termination process is completed.

As described above, according to the charge/discharge system 1 of the present embodiment, when the charge/discharge-side control device 210 receives, from the battery-side control device 120, specific information for specifying the type of the charge/discharge control program, the charge/discharge-side control device 210 acquires, from the server device 300, the charge/discharge control program of the type indicated by the received information, and performs charge/discharge control according to the acquired charge/discharge control program, and thus charge/discharge control is performed between the charger/discharger 200 side and the battery system 100 side based on the charge/discharge control program of the type compatible with both the sides. Thus, according to the charge/discharge system 1 of the present embodiment, charge/discharge control can be reliably performed between the battery system 100 and the charger/discharger 200. Thus, for example, even if the hardware and/or software configuring the charger/discharger 200 and the battery system 100 is altered, an appropriate charge/discharge control program is acquired from the server device 300, to perform charge/discharge control according to the acquired charge/discharge control program, thereby being able to reliably perform charge/discharge control over the battery system 100 and the charger/discharger 200.

Further, in a case of performing charge or discharge control according to the charge/discharge control program, the charge/discharge-side control device 210 starts control of charge or discharge, when the predetermined current value specified by the charge/discharge control program does not exceed the maximum current value at which the secondary battery 110 can be charged or discharged, and also when the temperature of the secondary battery 110 does not exceed the upper allowable limit under the charge or discharge control that is specified by the charge/discharge control program. Thus, the charge/discharge-side control device 210 can perform charge or discharge control over the secondary battery 110, based on the appropriate supply current value, and also perform charge or discharge control over the secondary battery 110 while maintaining the temperature of the secondary battery 110 at the appropriate temperature. As such, charging of the secondary battery 110 or discharging of the secondary battery 110 can be efficiently performed.

### <Second Embodiment>

Fig. 7 is a block diagram illustrating a configuration of a charge/discharge system 2 according to a second embodiment. As illustrated in the figure, in the charge/discharge system 2 according to the present embodiment, the battery system 100 includes a communication device 170 corresponding to the communication device 260 in the first embodiment.

That is, the communication device 170 is a device for connecting the battery-side control device 120 and the server device 300 via wired or wireless communication network 450 (for example, communication network using wired LAN, wireless LAN, the Internet, exclusive line, Power Line Communication (a communication network by PLC, etc.), or the like). The battery-side control device 120 is configured to control the communication device 170, so as to establish communicable connection with the server device 300.

Further, in the charge/discharge system 2 according to the present embodiment, the battery system 100 includes a storage device 180 corresponding to the storage device 270 in the first embodiment. That is, the storage device 180 includes, for example, a hard disk, a SSD, and/or the like, and is configured to store a charge/discharge control program acquired from the server device 300.

Further, in the charge/discharge system 2 according to the present embodiment, the charger/discharger 200 includes a charge/discharge control program number storage area 243 corresponding to the charge/discharge control program number storage area 142 in the first embodiment. That is, the charge/discharge control program number storage area 243 stores information corresponding to the charge/discharge control program number information stored in the server device 300 (hereinafter, referred to as the charger/discharger-side charge/discharge control program number information). The charger/discharger-side charge/discharge control program number information is information corresponding to the battery-side charge/discharge control program number information in the first embodiment.

Note that in the charge/discharge system 2 of the present embodiment, the battery information transmission unit 150 in the first embodiment does not exist. The configuration other than that is similar to that of the first embodiment.

### <System Operation>

Next, processes executed in the charge/discharge system 2 of the second embodiment will be described.

The processes executed in the charge/discharge system 2 of the present embodiment will be outlined as follows. That is, when initialization similar to that in the first embodiment is completed, the battery-side control device 120 receives the charger/discharger-side charge/discharge control program number information (corresponding to the specific information in the first embodiment) transmitted from the charge/discharge-side control device 210. Then, when receiving charger-side charge/discharge control program number information from the charge/discharge-side control device 210, the battery-side control device 120 is connected to the server device 300, to acquire the charge/discharge control program corresponding to the charger/discharger side charge/discharge control program number, received from the charge/discharge-side control device 210, of charge/discharge control programs stored in the server device 300. Then, the battery-side control device 120 performs charge/discharge control based on this charge/discharge control program in cooperation with the charge/discharge-side control device 210.

As such, in the charge/discharge system 2 of the second embodiment, not the battery-side control device 120 (the battery system 100 side) but the charge/discharge-side control device 210 (the charger/discharger 200 side) transmits the specific information, and not the charge/discharge-side control device 210 (the charger/discharger 200 side) but the battery-side control device 120 (the battery system 100 side) acquires the charge/discharge control program from the server device 300.

Hereinafter, the details of the above processes will be described.

Figs 8 to 10 are flowcharts illustrating the processes executed in the charge/discharge system 2. First, process S101-S117, S150, S201-S213, and S250 illustrated in Fig. 8 are similar to those in the first embodiment.

Then, when the process of S117 is performed, as illustrated in Fig. 9, the charge/discharge control device 210 transmits hardware information (S319). When receiving the hardware information (S415), the battery-side control device 120 determines whether the battery-side control device itself is compatible with the hardware specification indicated by the hardware information (S417). When the battery-side control device is not compatible with the specification (S417: N), the battery-side control device 120 transmits notification information indicative that charge/discharge is impossible to the charge/discharge-side control device 210 (S421), performs a battery-side termination process similar to that in the first embodiment (S250), to complete the sequence of operations. Then, the charge/discharge-side control device 210 receives, from the battery-side control device 120, notification information indicative that charge/discharge is impossible (S321).

On the other hand, when the battery-side control device 120 is compatible with the hardware specification indicated by the above described hardware information (S417: Y), the battery-side control device 120 transmits notification information indicative that charge/discharge is possible to the charge/discharge-side control device 210 (S419). The charge/discharge-side control device 210 receives this notification information, and sets the counter n at "1" (S323: Y). Then, the charge/discharge-side control device 210 transmits, to the battery-side control device 120, the charger/discharger-side charge/discharge control program number information (e.g., "1") corresponding to the current counter n (S325).

The battery-side control device 120, after the process at S419, waits for the reception of the charger/discharger-side charge/discharge control program number information, and when receiving it (S423), the battery-side control device 120 is connected to the server device 300, to acquire (download) a charge/discharge control program (S326). Specifically, the charge/discharge-side control device 210 is connected to the server device 300, to refer to the charge/discharge control program storage area 311 and the server-side charge/discharge program number information storage area 312, and download the charge/discharge control program corresponding to the above received charger/discharger side charge/discharge control program number, of the charge/discharge control programs stored in the server device 300.

Subsequently, as illustrated in Fig. 10, the battery-side control device 120 stores the downloaded charge/discharge control program in the storage device 180. Then, the battery-side control device 120 determines whether charge/discharge control can be performed under the received charge control program (S327). This determination is to determine, for example, that the battery-side control device 120 cannot perform charge/discharge control, if the maximum current value defined by the received charge/discharge control program exceeds the maximum current value at which the secondary battery 110 can be supplied from the charger/discharger 200 or exceeds the maximum current value at which the secondary battery 110 can be discharged. Further, it is also determined that charge/discharge control cannot be performed, if the temperature of the secondary battery 110 exceeds the upper allowable limit when the charge/discharge control is performed under the received charge control program.

Here, when charge/discharge control cannot be performed under the received charge/discharge control program (S327: N), the battery-side control device 120 increments the counter n by 1 (S331). Then the battery-side control device 120 compares the current value of the counter n with m (S333), and when the value of the counter n is greater than m (S333: Y), the battery-side control device 120 executes the battery-side termination process similar to that of the first embodiment (S250), to complete the sequence of processes. On the other hand, the value of the counter n is equal to or smaller than m (S333: N), the process at S325 in Fig. 9 is repeated.

When the battery-side control device 120 can perform charge/discharge control under the received charge/discharge control program (S327: Y), the battery-side control device 120 transmits, to the charge/discharge-side control device 210, the charge/discharge control program acquired from the server device 300 and the charger/discharger-side charge/discharge control program number information corresponding thereto (S329).

The charge/discharge-side control device 210 receives the charger/discharger-side charge/discharge control program number information and the charge/discharge control program transmitted from the battery-side control device 120. The received charge/discharge control program is read into a memory (S425).

Then, the charge/discharge-side control device 210 determines whether charge/discharge control can be performed (S427), and when charge/discharge control cannot be performed (S427: N), the charge/discharge-side control device 210 increments the value of the counter n by 1 (S429).

Then, the charge/discharge-side control device 210 compares the current value of the counter n with m (S431), and when the value of the counter n is greater than m (S431: Y), the charge/discharge-side control device 210 performs a charge/discharge-side termination process similar to that in the first embodiment (S150), to complete the sequence of processes. On the other hand, when the value of the counter n is smaller than m (S431: N), the process at S423 is repeated.

On the other hand, when the charge/discharge-side control device 210 can perform charge/discharge control (S427: Y), the charge/discharge-side control device 210 and the battery-side control device 120 charge the secondary battery 110 (or discharge the secondary battery 110) in cooperation with each other according to the charge/discharge control program (S601). The charge/discharge control process executed at S601 is similar to S301 in the first embodiment.

Note that S303, the charge/discharge-side termination process (S150) executed after S303, and the battery-side termination process (S250) executed after S303 are similar to those in the first embodiment.

As described above, according to the charge/discharge system 2 of the present embodiment, when the battery-side control device 120 receives the specific information for specifying the type of the charge/discharge control program from the charge/discharge-side control device 210, the charge/discharge control program of the type indicated by the received information is acquired from the server device 300, charge/discharge control is performed according to the acquired charge/discharge control program, and thus charge/discharge control is performed over the charger/discharger 200 side and the battery system 100 side based on the charge/discharge control program of the type compatible with both the sides. Thus, according to the charge/discharge system 2 of the present embodiment, charge/discharge control can be reliably performed over the battery system 100 and the charger/discharger 200. Thus, for example, even if hardware and/or software configuring the charger/discharger 200 and the battery system 100 is altered, the appropriate charge/discharge control program is acquired from the server device 300, to perform charge/discharge control according to the acquired charge/discharge control program, thereby being able to reliably perform charge/discharge control between the battery system 100 and the charger/discharger 200.

Further, in a case of performing charge or discharge control according to the charge/discharge control program, the battery-side control device 120 starts control of charge or discharge, when the predetermined current value specified by the charge/discharge control program does not exceed the maximum current value at which the secondary battery 110 is chargeable or dischargeable, and also when the temperature of the secondary battery 110 does not exceed the upper allowable limit under the charge or discharge control that is specified by the charge/discharge control program. Thus, the battery-side control device 120 can perform charge or discharge control over the secondary battery 110, based on the appropriate supply current value, and also perform charge or discharge control over the secondary battery 110 while maintaining the temperature of the secondary battery 110 at the appropriate temperature. As such, charging of the secondary battery 110 or discharging of the secondary battery 110 can be efficiently performed.

Although preferable embodiments have been described hereinabove, these embodiments are provided to facilitate the understanding of the present invention, and are not provided to limit the understanding of the present invention. The present invention may be changed and improved without departing from the gist thereof, and the equivalent thereof may be included in the present invention.

For example, in the above descriptions, the first embodiment, in which the discharge side control device 210, included in the charger/discharger 200, downloads the charge/discharge control program from the server device 300 and performs charge/discharge control, as a main device, is separated from the second embodiment, in which the battery-side control device 120, included in the battery system 100, downloads the charge/discharge control program from the server device 300 and performs charge/discharge control, as a main device. However, these embodiments may be combined. For example, a configuration may be such that information regarding priority is stored in each of the charger/discharger 200 and the battery system 100, and when the battery-side connector 153 is connected with the charge/discharge-side connector 253, both of them transmit/receive the above information to/from each other, and the one that recognizes the priority is higher transmits the charge/discharge control program number information, while the one that receives this information (the priority is lower) downloads the charge/discharge control program from the server device 300.

### [Reference Signs List]

1 charge/discharge system, 2 charge/discharge system, 4 alternating-current power supply, 5 load, 100 battery system, 110 secondary battery, 120 battery-side control device, 130 battery-side power detection unit, 131 voltage conversion unit, 132 current conversion unit, 140 battery-side storage device, 141 initialization program storage area, 142 charge/discharge control program number storage area, 143 charge/discharge pattern sequence number storage area, 144 battery information storage area, 15 battery information transmission unit, 151 power-supply line, 152 communication line, 153 battery-side connector, 170 communication device, 180 storage device, 200 charger/discharger, 210 charge/discharge-side control device, 220 power-supply unit, 221 power converter, 222 gate control device, 223 alternating-current power supply, 230 charge/discharge-side power detection unit , 231 voltage conversion unit, 232 current conversion unit, 240 charge/discharge-side storage device, 241 initialization program storage area, 242 hardware information storage area, 243 charge/discharge control program number storage area, 251 power-supply line, 252 communication line, 253 charge/discharge-side connector, 260 communication device, 270 storage device, 300 server device, 311 charge/discharge control program storage area, 312 server-side charge/discharge control program number information storage area, 350 communication network, 450 communication network

## Claims

1. A method for controlling a charge/discharge system comprising a battery system and a charger/discharger, the battery system including a secondary battery and a battery-side control device, the charger/discharger being configured to discharge the secondary battery to output direct-current power, and configured to convert power supplied from an alternating-current power supply into direct current, to charge the secondary battery, the charger/discharger including a charge/discharge-side control device configured to control the charge and the discharge, the method comprising:
the charge/discharge-side control device establishing communicable connection with the battery-side control device;
the charge/discharge-side control device establishing communicable connection with an external server device, when receiving specific information, transmitted from the battery-side control device, for specifying a charge/discharge control program, the charge/discharge control program being a program for controlling the charge and the discharge;
the charge/discharge-side control device acquiring, from the server device, the charge/discharge control program specified by the specific information; and
the charge/discharge-side control device controlling the charge and the discharge according to the acquired charge/discharge control program.

2. The method for controlling the charge/discharge system according to claim 1, wherein
when controlling the charge or the discharge according to the acquired charge/discharge control program, the charge/discharge-side control device determines whether a predetermined current value defined by the charge/discharge control program exceeds a maximum current value at which the secondary battery can be charged or discharged, or whether a temperature of the secondary battery exceeds a maximum allowable value under control of the charge or the discharge defined by the charge/discharge control program, and
when determining that the current value does not exceed the maximum current value or the temperature of the secondary battery does not exceed the maximum allowable value, the charge/discharge-side control device starts control of the charge or the discharge.

3. A method for controlling a charge/discharge system comprising a battery system and a charger/discharger, the battery system including a secondary battery, the charger/discharger being configured to discharge the secondary battery to output direct-current power, and configured to convert power supplied from an alternating-current power supply into direct current, to charge the secondary battery, the charger/discharger including a charge/discharge-side control device, the battery system including a battery-side control device configured to control the charge and the discharge, the method comprising:
the battery-side control device establishing communicable connection with the charge/discharge-side control device;
the battery-side control device establishing communicable connection with an external server device, when receiving specific information, transmitted from the charge/discharge-side control device, for specifying a charge/discharge control program, the charge/discharge control program being a program for controlling the charge and the discharge;
the battery-side control device acquiring, from the server device, the charge/discharge control program specified by the specific information; and
the battery-side control device controlling the charge and the discharge according to the acquired charge/discharge control program.

4. The method for controlling the charge/discharge system according to claim 3, wherein
when controlling the charge or the discharge according to the acquired charge/discharge control program, the battery-side control device determines whether a predetermined current value defined by the charge/discharge control program exceeds a maximum current value at which the secondary battery can be charged or discharged, or whether a temperature of the secondary battery exceeds a maximum allowable value under control of the charge or the discharge defined by the charge/discharge control program, and
when determining the current value does not exceed the maximum current value or the temperature of the secondary battery does not exceed the maximum allowable value, the battery-side control device controls the charge or the discharge.

5. A charge/discharge system comprising:
a battery system including a secondary battery and a battery-side control device; and
a charger/discharger configured to discharge the secondary battery to output direct-current power, and configured to convert power supplied from an alternating-current power supply into direct current, to supply the secondary battery,
the charger/discharger including a charge/discharge-side control device configured to control the charge and the discharge,
the charge/discharge-side control device being configured to establish communicable connection with the battery-side control device,
the charge/discharge-side control device being configured to establish communicable connection with an external server device, when receiving specific information, transmitted from the battery-side control device, for specifying a charge/discharge control program, the charge/discharge control program being a program for controlling the charge and the discharge,
the charge/discharge-side control device being configured to acquire, from the server device, the charge/discharge control program specified by the specific information, and
the charge/discharge-side control device being configured to control the charge and the discharge according to the acquired charge/discharge control program.

6. A charge/discharge system comprising:
a battery system including a secondary battery; and
a charger/discharger configured to discharge the secondary battery to output direct-current power, and configured to convert power supplied from an alternating-current power supply into direct current, to charge the secondary battery,
the charger/discharger including a charge/discharge-side control device, the battery system including a battery-side control device configured to control the charge and the discharge,
the battery-side control device being configured to establish communicable connection with the charge/discharge-side control device,
the battery-side control device being configured to establish communicable connection with an external server device, when receiving specific information, transmitted from the charge/discharge-side control device, for specifying a charge/discharge control program, the charge/discharge control program being a program for controlling the charge and the discharge,
the battery-side control device being configured to acquire, from the server device, the charge/discharge control program specified by the specific information, and
the battery-side control device being configured to control the charge and the discharge according to the acquired charge/discharge control program.
